# EUROPEAN PATENT APPLICATION

(11) **EP 2 587 371 A1**
(43) Date of publication of application: **01.05.2013**
(21) Application number: 12290119.2
(22) Date of filing: 03.04.2012
(51) Int. Cl.: G06F 9/44

(54) **Improved configuration of a user interface for a mobile communications terminal**

(30) Priority: 28.10.2011 EP 11290500
(71) Applicant: Doro AB, 226 43 Lund (SE)
(72) Inventor: Cammarata, Yves, 75011 Paris (FR)
(74) Representative: Ström & Gulliksson AB

(57) **Abstract**

A mobile communications terminal (200) comprising a memory (240), a user interface component (120, 220) and a controller (210). The controller (210) is configured to receive a user interface script, said user interface script defining a user interface comprising at least one tab object, and to parse said user interface script, by parsing said at least one tab, said tab comprising settings and at least one icon being associated with an action, wherein the settings are in a form that indicates an internal relationship and is independent of the user interface component (120, 220). The controller then generates a resulting user interface by adapting said at least one tab according to characteristics of the user interface component (120, 220) based on the settings and presents said resulting user interface to provide a simplified control interface for said mobile communications terminal (200).

## Description

### TECHNICAL FIELD

This application relates to a method, a mobile communications terminal and a computer-readable storage medium for an improved user interface, and in particular to a method, a mobile communications terminal and a computer-readable storage medium for an improved configuration of a user interface.

### BACKGROUND

In today's society personal interests and preferences are of importance to a user when using or choosing a mobile device. For this reason various designs have been evolved to offer a user the possibility of customizing a device. Such customizations are offered as downloadable packages, pre-stored packages or user implemented.

The contemporary market is filled with different providers offering their own user interfaces and standards for changing the user interface. These adaptable interfaces also need to be adapted to various devices from the same provider. This causes a great deal of specialized design work to be done by both providers of devices as well as providers of user interfaces. The designer is also required to have knowledge about the specific mobile communications terminal's capabilities and (physical) requirements and restrictions.

There is thus a need for an improved manner of making and installing a new user interface or home application, also referred to as a universe, on a device in which it is easy to define a new user interface.

### SUMMARY

It is an object of the teachings of this application to overcome the problems listed above by providing a user interface based on objects. Each item that is to be displayed on a display (possibly a touch display) is defined by a data object.

A controller is configured to act as a rendering engine and receive rendering data relating to the object and in response thereto render the object at a position and with functional capabilities according to the rendering data. In one embodiment the data is given as a text file. In such an embodiment the controller is configured to read said text file, parse the information (possibly relating to size and main placement) and determine a position and size of the corresponding rendering of the object on a display. The position and size are dependent on the size of the display as well as the size of the home application. The position and size are also dependent on the number of other objects to be rendered and their sizes and main placements.

The controller is further configured to associate the object with a functionality of the device according to the functional capability of the object. In the resulting user interface an actuation of the object's representation will cause the associated functionality to be executed.

It is a further object of the teachings of this application to overcome the problems listed above by providing a mobile communications terminal comprising a memory, a user interface component and a controller, wherein said controller is configured to: receive a user interface script, said user interface script defining a user interface comprising at least one tab object; parse said user interface script, by parsing said at least one tab, said tab comprising settings and at least one icon being associated with an action, wherein the settings are in a form that indicates an internal relationship and is independent of the user interface component; generate a resulting user interface by adapting said at least one tab according to characteristics of the user interface component based on the settings; and present said resulting user interface to provide a simplified control interface for said mobile communications terminal.

In one embodiment the user interface script is received as for example a text file. In one such embodiment the script is stored in a JSON (Java Script Object Notation) format with references to resources such as images, icons and applications.

It is a further object of the teachings of this application to overcome the problems listed above by providing a method for use in a mobile communications terminal comprising a memory, a user interface component and a controller, said method comprising: receiving a user interface script, said user interface script defining a user interface comprising at least one tab object; parsing said user interface script, by parsing said at least one tab, said tab comprising settings and at least one icon being associated with an action, wherein the settings are in a form that indicates an internal relationship and is independent of the user interface component; generating a resulting user interface by adapting said at least one tab according to characteristics of the user interface component based on the settings; and presenting said resulting user interface to provide a simplified control interface for said mobile communications terminal.

It is a further object of the teachings of this application to overcome the problems listed above by providing a computer readable medium comprising instructions that when loaded into and executed by a controller, such as a processor, causes the execution of a method according to herein.

To update a user interface a text file is thus created or received at a device and from this text file a controller configures, adapts and displays a corresponding visual user interface.

This provides a manner of simplifying the adaptation of a user interface style to mobile communications terminals having different user interface components, such as displays having differing characteristics, such as sizes and/or resolutions, and allows for a simplification that enables easier and more intuitive handling of a mobile communications terminal. In the market of mobile phones a wide range of different models, each having a specific resolution and/or display size, exists. It is difficult to maintain a correct overview of all available resolutions and/or display sizes as well as the capabilities of all mobile phones on the market. According to the teachings herein a creator of a user interface script does not have to be aware of the restrictions of a mobile communications terminal when designing the user interface and generating the user interface script for the user interface, as a controller according to herein is enabled to adapt a user interface based on the user interface script, according to physical restrictions, and provide a simplified control of and status overview for a mobile communications terminal. This simplifies the creation (and/or modification) of user interfaces and greatly reduces the testing procedures otherwise needed to ensure that a user interface design is adaptable to a mobile communications terminal.

The inventors of the present application have realized, after inventive and insightful reasoning, that by structuring a configuration file, in the form of a text file, and carefully designing a rendering engine that interprets such a text file based on the number of objects to render, the size of such objects, the size of the display area, the main placement of such objects and the capabilities of such objects, a manner of adapting a user interface or user interface skin to a series of devices independent of the provider is achieved which can be used to provide simplified user interfaces for mobile communications terminals having a wide selection of applications and functions.

Other features and advantages of the disclosed embodiments will appear from the attached detailed disclosure.

### BRIEF DESCRIPTION OF DRAWINGS

The invention will be described in further detail under reference to the accompanying drawings in which:
Figure 1 shows a schematic view of a mobile communications terminal according to one embodiment of the teachings of this application;
Figure 2 shows a schematic view of the general structure of a mobile communications terminal according to one embodiment of the teachings of this application;
Figure 3 shows a schematic view of a telecommunications network comprising a mobile communications terminal according to one embodiment of the teachings of this application;
Figure 4 shows a schematic view of a computer-readable medium according to one embodiment of the teachings of this application;
Figure 5 shows a schematic view of an object model according to one embodiment of the teachings of this application;
Figure 6 shows a view of an example object model according to an example of the teachings of this application;
Figures 7A, 7B and 7C each shows a schematic view of a resulting user interface according to one embodiment of the teachings of this application;
Figure 8 shows a schematic view of a functionality graph for a mobile communications terminal according to an example of the teachings of this application;
Figure 9 shows a flow chart for a general method according to an embodiment of the teachings of this application; and
Figure 10 shows a schematic view of a mobile communications terminal displaying a resulting user interface according to one embodiment of the teachings of this application.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

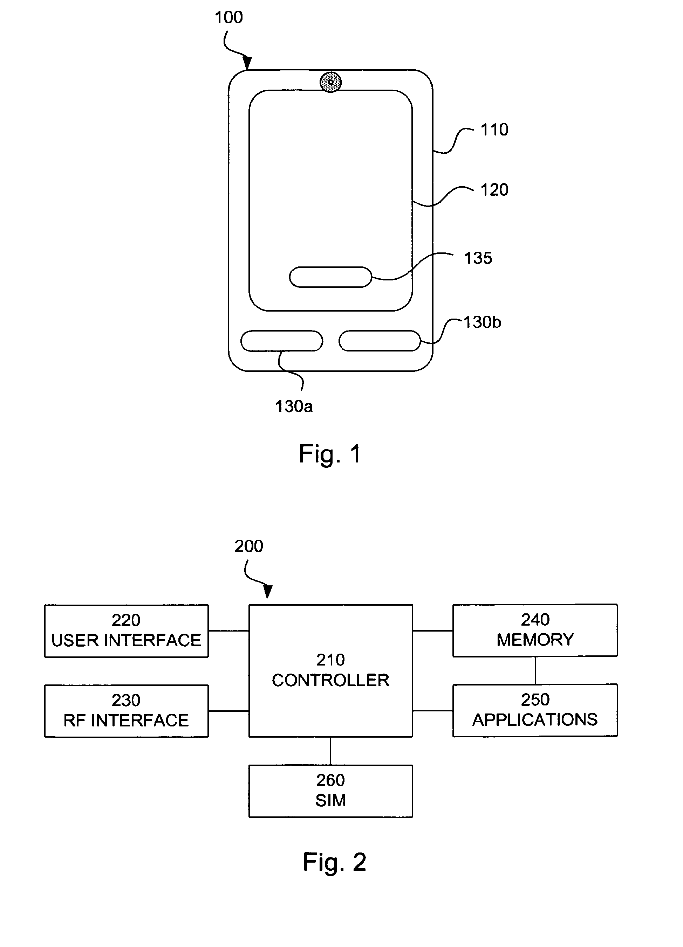

Figure 1 shows a schematic overview of a mobile communications terminal 100 adapted according to the teachings herein. In the embodiment shown the mobile communications terminal is a mobile phone 100. In other embodiments the mobile communications terminal 100 is a personal digital assistant, a media player, a location finding device or any hand-held device capable of communicating with other devices.

The mobile phone 100 comprises a housing 110 in which a display 120 is arranged. In one embodiment the display 120 is a touch display. In other embodiments the display 120 is a non-touch display. Furthermore, the mobile phone 100 comprises two keys 130a, 130b. In this embodiment there are two keys 130a-b, but any number of keys, including none, is possible and depends on the design of the mobile phone 100. In one embodiment the mobile phone 100 is configured to display and operate a virtual key 135 on the touch display 120. It should be noted that the number of virtual keys 135 are dependent on the design of the mobile phone 100 and an application that is executed on the mobile phone 100. In one embodiment the communications terminal 100 comprises an ITU-T keypad or a QWERTY (or equivalent) keypad in addition to or as an alternative to a touch-sensitive display. In an embodiment where the keypad is an alternative to a touch-sensitive display, the display 120 is a non-touch-sensitive display.

Figure 2 shows a schematic view of the general structure of a mobile communications terminal which may be a mobile phone 100 according to figure 1. The mobile communications terminal 200 comprises a controller 210 which is responsible for the overall operation of the mobile terminal and is preferably implemented by any commercially available CPU ("Central Processing Unit"), DSP ("digital signal processor") or any other electronic programmable logic device, or a combination of such processors and/or other electronic programmable logic device. The controller 210 may be implemented using instructions that enable hardware functionality, for example, by using executable computer program instructions in a general-purpose or special-purpose processor that may be stored on a computer readable storage medium (disk, memory etc) 240 to be executed by such a processor. The controller 210 is configured to read instructions from the memory 240 and execute these instructions to control the operation of the mobile communications terminal 100. The memory 240 may be implemented using any commonly known technology for computer-readable memories such as ROM, RAM, SRAM, DRAM, CMOS, FLASH, DDR, EEPROM memory, flash memory, hard drive, optical storage or any combination thereof. The memory 240 is used for various purposes by the controller 210, one of them being for storing application data and various software modules in the mobile terminal.

The software modules include a real-time operating system, drivers for a man-machine interface 220, an application handler as well as various applications 250. The applications 250 are sets of instructions that when executed by the controller 210 control the operation of the mobile communications terminal 100. The applications 250 can include a messaging application for short messaging service (SMS), multimedia messaging service (MMS) and electronic mail, a media player application, as well as various other applications 250, such as applications for voice calling, video calling, web browsing, document reading and/or document editing, an instant messaging application, a phonebook application, a calendar application, a control panel application, one or more video games, a notepad application, location finding applications, etc. In one embodiment the memory 240 holds a database containing subscription settings for the mobile communications terminal according to different operators. Since the number of operators available is usually not large the database can be kept relatively small and does not require much storage space. Furthermore, the mobile communications terminal 200 comprises a Subscriber Identity Module (SIM) reader 260 that is capable of reading data from and writing data to a SIM card.

The mobile communications terminal 200 further comprises a user interface 220, which in the mobile phone 100 of figure 1 is comprised of the display 120, the keys 130a-b, 135, a microphone and a loudspeaker. The user interface (UI) 220 also includes one or more hardware controllers, which together with the user interface drivers cooperate with the display 120, keypad 130a-b, as well as various other I/O devices such as microphone, loudspeaker, vibrator, ringtone generator, LED indicator, etc. As is commonly known, the user may operate the mobile terminal through the man-machine interface thus formed.

The mobile communications terminal 200 further comprises a radio frequency interface 230, which is adapted to allow the mobile communications terminal to communicate with other communications terminals in a radio frequency band through the use of different radio frequency technologies. Examples of such technologies are W-CDMA, GSM, UTRAN, LTE and NMT to name a few. The controller 210 is configured to operably execute the applications 250, such as the voice call and message handling applications, through the RF interface 230 and software stored in the memory 240, which software includes various modules, protocol stacks, drivers, etc. to provide communication services (such as transport, network and connectivity) for the RF interface 230, and optionally a Bluetooth interface and/or an IrDA interface for local connectivity. The RF interface 230 comprises an internal or external antenna as well as appropriate radio circuitry for establishing and maintaining a wireless link to a base station. As is well known to a person skilled in the art, the radio circuitry comprises a series of analogue and digital electronic components, together forming a radio receiver and transmitter. These components include, for example, band pass filters, amplifiers, mixers, local oscillators, low pass filters, AD/DA converters, etc.

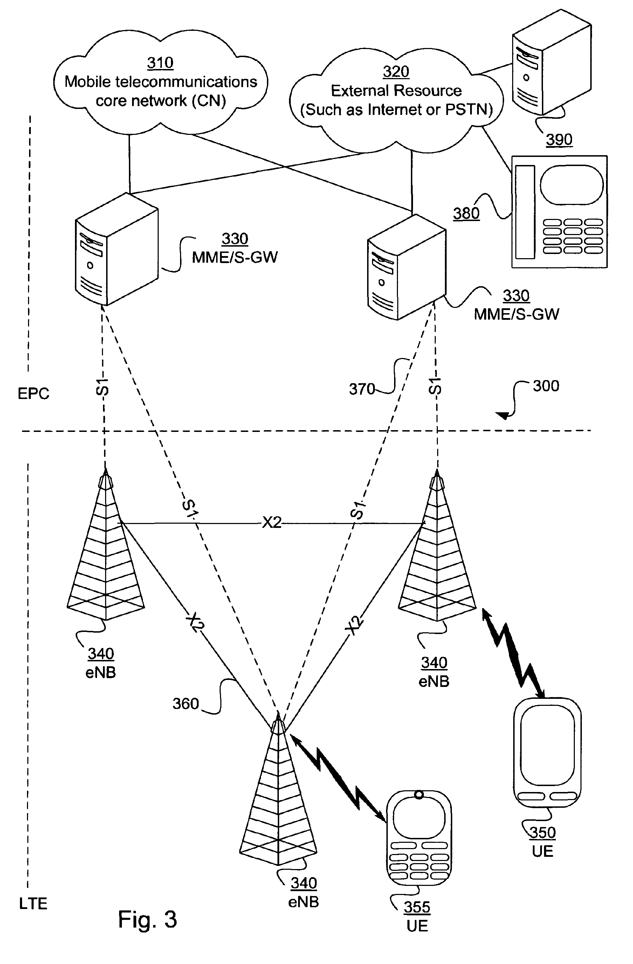

Figure 3 shows a schematic view of the general structure of a telecommunications system 300 according to the teachings herein. In the telecommunication system of figure 3, various telecommunications services such as cellular voice calls, www/wap browsing, cellular video calls, data calls, facsimile transmissions, music transmissions, still image transmissions, video transmissions, electronic message transmissions and electronic commerce may be performed between a mobile terminal 100, 300 according to the disclosed embodiments and other communications terminals, such as another mobile terminal 355 or a stationary telephone 380. The mobile terminals 350, 355 are connected to a mobile telecommunications network 310 through Radio Frequency links via base stations 340.

The telecommunications system 300 comprises at least one server 330. A server 330 has a data storage and a controller that may be implemented by any commercially available CPU ("Central Processing Unit"), DSP ("Digital Signal Processor") or any other electronic programmable logic device. In one embodiment such a server is a Mobility Management Entity (MME). In one embodiment such a server is a Gateway (GW). The servers 330 are configured to communicate with a mobile telecommunications core network (CN) 310 and/or an external resource 320 such as the internet or a Public Switched Telephone Network (PSTN). A PSTN 320 is configured to communicate with and establish communication between stationary or portable telephones 380. In one embodiment the external resource comprises or is configured to communicate with an external service provider 390. In one embodiment the servers 330 are configured to communicate with other communications terminals using a packet switched technology or protocol. In such an embodiment the servers 330 may make up an Evolved Packet Core (EPC) layer.

The servers 330 are configured to communicate with nodes, also referred to as base stations 340. In one embodiment the base station 340 is an evolved Node Base (eNB). A base station 340 is further configured to communicate with a server 330. In one embodiment the communication between a server 330 and a base station 340 is effected through a standard or protocol 370. In one embodiment the protocol is S1. A base station 340 is configured to communicate with another base station 340. In one embodiment the communication between a base station 340 and another base station 340 is effected through a standard or protocol 360. In one embodiment the protocol 360 is X2. A base station 340 is further configured to handle or service a cell. In one embodiment the at least one base stations 340 make up a Long Term Evolution (LTE) layer. In one embodiment the at least one base stations 340 make up an LTE Advanced layer.

In one embodiment the base station 340 is configured to communicate with a mobile communications terminal 350 (100) through a wireless radio frequency protocol.

In one embodiment the telecommunications system 300 is an Evolved Packet System (EPS) network. In one embodiment the telecommunications system is a system based on the 3GPP (3rd Generation Partnership Project) standard. In one embodiment the telecommunications system is a system based on the UMTS (Universal Mobile Telecommunications System) standard. In one embodiment the telecommunications system is a system based on a telecommunications standard such as GSM, D-AMPS, CDMA2000, FOMA or TD-SCDMA.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

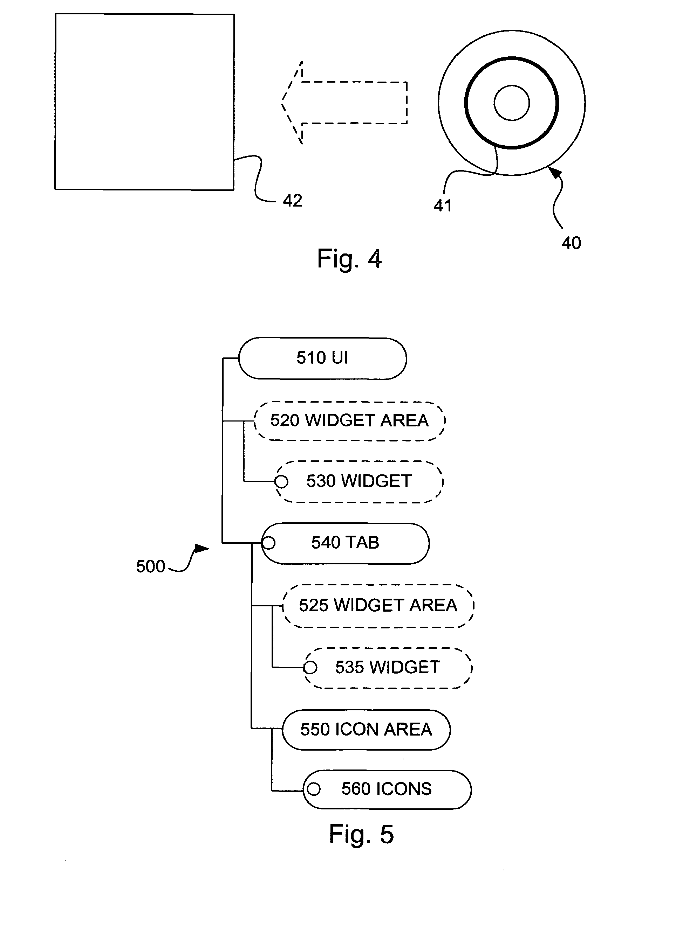

Figure 4 shows a schematic view of a computer-readable medium as described in the above. The computer-readable medium 40 is in this embodiment a CD (Compact Disc) or a DVD (Digital Video Disc). The CD 40 comprises instructions 41 that when loaded into a controller such as a processor executes a method or procedure according to the embodiments disclosed above. The CD 40 is arranged to be read by a reading device 42 for loading the instructions into the controller. It should be noted that a computer-readable medium can also be other mediums such as memory sticks, flash drives, hard drives or other memory technologies commonly used.

To enable modifications and/or customizations of a user interface, a user, such as an operator, is enabled to define a script. The script may be defined graphically, by placing objects on a template screen view, or by specifying what objects that should be included in what (display) areas of a user interface and possibly in what order.

Such a user interface script is preferably based on a user interface object model. Basing the script on an object model simplifies interpreting the script. Figure 5 shows such a user interface object model 500. The user interface object model 500 has a main or top level object 510 designating the actual user interface (UI). The user interface object 510 is optionally (the one to one or zero relationship being indicated in figure 5 by the dashed line) related to a shared widget area object 520. The shared widget area object 520 is associated with a display area, in this case a widget area, in the user interface that is to display widgets and that will be the same for (or shared by) all instances of the user interface. The shared widget area object 520 contains settings on how the shared widget area should be displayed, for example a logo, a background image/color, a text color etc. The shared widget area object 520 is related to one or more widget objects 530. A widget object 530 is associated with a widget application and contains a designation of the widget as well as a preferred configuration for the associated or designated widget. The configuration comprises a position and possibly a size for the graphical representation of the widget, i.e. parameters that control how and where the widget is to be displayed when the user interface is rendered on a display 120. To make the user interface described by the object model more flexible, the position is given in relative coordinates, for example by stating the order in which the graphical representation should be displayed or by specifying an object distance or object position from a reference, such reference for example being a border of the widget area. One example being that a widget is specified to be displayed four icon distances from the right hand border, or at the fourth position from the left hand border. In one embodiment the order of the specification of a widget determines the order to display it in. The position and/or size indications in the settings are thus given on a form that is independent of the mobile communications terminal that is to implement the resulting user interface. One example of a shared widget area (or a widget in the shared widget area) is a status bar.

The user interface object 510 is also related to one or more tab objects 540 (the one to many relationship being indicated by the circle in the tab object 540). A tab represents one instance (also referred to as a universe herein) of the user interface and provides an intuitive manner of grouping the functionality of a mobile terminal 100. In a tab or universe applications that are related to a specific type, category, functionality or share an association are grouped for easy reference by a user. Examples of tabs or universes are HOME (being related to main functionality of the terminal 100 such as making a call, sending a message or browsing); SPORT (being related to applications for use in a sports such as GPS (Global Positioning system), sport coaching or possibly media players); and HEALTH (being related to health applications such as glucose measuring, food/recipe proposal applications and reminders for taking medicine as well as various health alert applications).

A tab object 540 represents a tab or instance of the user interface and contains settings that specify how the tab should be displayed when the user interface is rendered on a display 120. These settings include an icon representing the tab and for selecting the tab, a background image, background color, text color etc.

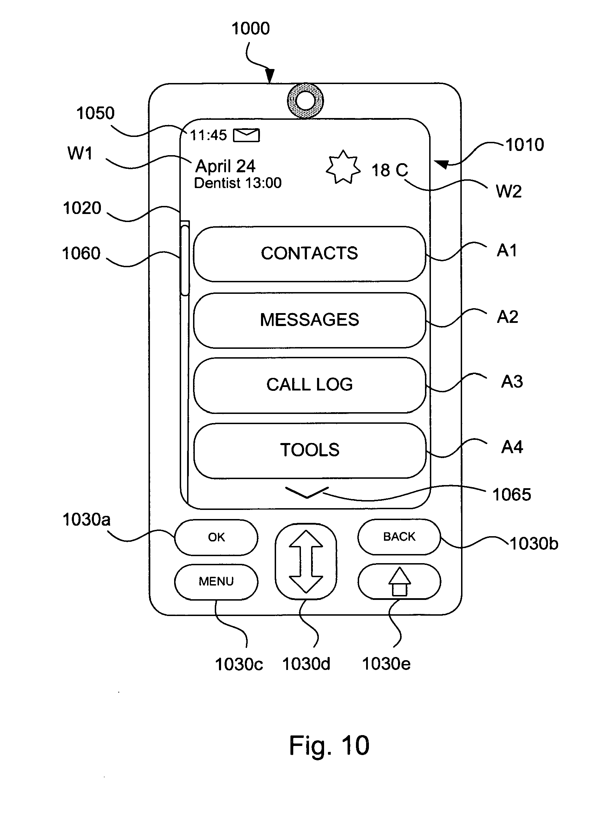

In an embodiment where the user interface object 510only relate to one tab object 540 (one universe) the settings of the tab object 540 does not include the icon representing and for selecting the tab. Such an icon is not necessary as the tab object 540 represent the only available universe and is thus always displayed. An example of such an embodiment is disclosed in figure 10.

The settings further include settings on how to display icons representing applications and other functionality. One such setting indicates whether the icons should be displayed in a linear list or in a grid having a specific number of columns. Note that a linear list is basically a grid having a single column (or row). The settings may also include specifications on how to display the tab in portrait mode and in landscape mode.

The tab object 540 is related to an icon area object 550 and optionally a widget area object 525. The icon area object 550 designates a display area, in this case an icon area where one or more icons are to be displayed. The icon area object 550 is also related to one or more icon objects 560. An icon object 560 contains a graphical representation, an icon, and represents an action to launch or activate one of an application, a link/shortcut for example to a website, a remote application (such as a cloud application) or a function of the terminal (such as initiating a call) to name a few possibilities. The icon object 560 may represent a telephone number or other addressing means, such as an email address or an instant messaging address to name a few examples, and the associated action of initiating a communication session, such as a telephone call, to the specified telephone number or other addressing means. The icon object 560 may also contain settings for how and where the icon representing the application should be displayed when the user interface is rendered on a display 120. The positioning of an icon is given in relative terms, such as by giving an order for the icon to be displayed in or by giving a priority or ranking for the icon. An icon will be rendered in the resulting user interface in the order that is specified or according to its ranking/priority respectively. In one embodiment the icons are displayed in the order that they are parsed in.

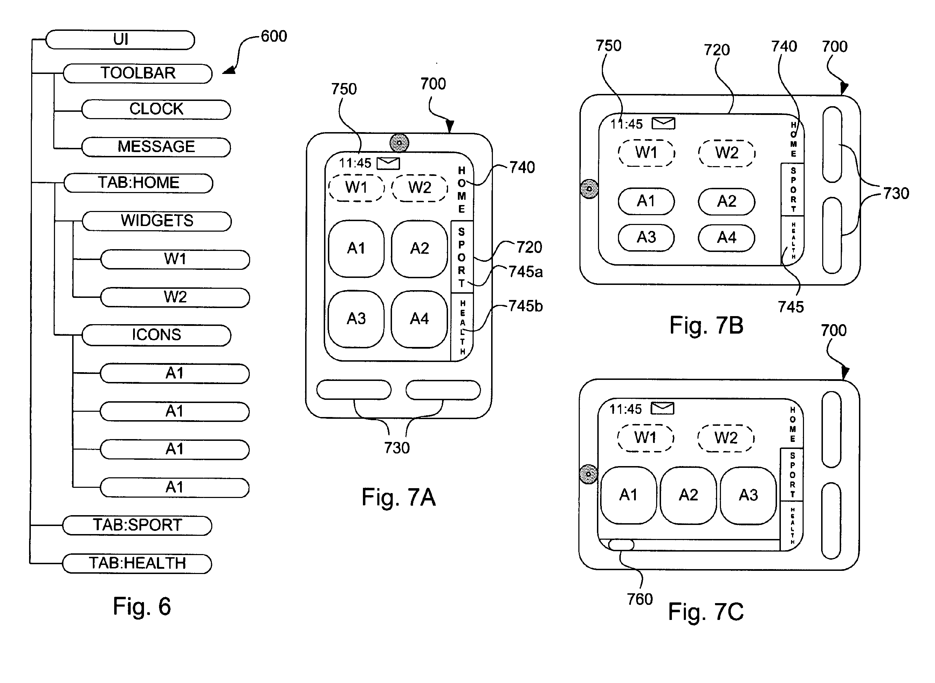

The size of an icon can also be specified in the user interface script. If the size is not specified the controller is configured to determine a size for an icon depending on the display mode (landscape, portrait, grid, list), the display characteristics, such as size and resolution. In one example for displaying 4 icons in a grid layout the size for each icon equals the icon area height (or width) divided by 2 and minus a margin. The margin can be set by the user interface designer or be a default. The margin can also be related to the size of the icon so that each icon is surrounded by"empty'space at a distance of for example one fifth of the icon size. The margins are of importance as if the icons are placed too close together on a touch screen it will increase the risk of a user inadvertently touching an icon that was not supposed to be touched. The icons shape can also be chosen to depend on the size of the display and the number of icons that are to be shown. For example, should four icons be displayed in a 2 column matrix in an icon area having a resolution of 60 (height) x 120 (width) pixels, it is clear that one dimension has more pixels than the other. For such a display each column will have 60 pixels width and to fit in icons comfortably they should have a width smaller than 60 pixels, for illustrative purposes the width for an icon is chosen to be 45 pixels leaving a margin of 10 pixels on each side. The height for each column displayed at one time is also 60 pixels. Should all four icons be displayed at the same time the resulting icon height is 15 pixels (using the same margin) resulting in a rectangular shape of 45 x 15 pixels. If the user interface is designed to employ a scrollbar the icons can have a square shape of 45 x 45 pixels. Figures 7A, 7B and 7C (which are described below) show two examples of how the icon shape can vary. It should be noted that the manner of deciding a size and position for an icon is also applicable to widgets and tabs.

As noted above the icons may be specified to be displayed in a grid having a specified number of columns or rows (a linear list is a grid having one column or one row-depending on orientation).

In one embodiment an icon object 560 is associated with a function of retrieving and displaying further icon objects 560. This allows for a further grouping of applications in sub categories within a universe. The use of icons that are associated with the action of retrieving and displaying further icons allow for creating a hierarchical level system in the universe or tab and this allows for a simple user interface that is easy to overview, but still offers advanced functionality to a user.

The widget area object 525 is similar to a shared widget area object 520, but is designed for the related tab object 540 and specifies widgets (and their placement in a display area, in this case a widget area) for the related tab object 540. This enables a user to specify that different widgets are displayed in different tabs. The widgets in the widget area are positioned in the same manner as the icons.

This allows for generating a script that describes how a user interface should be rendered in a manner that is easy to implement and provides a script that is easy to interpret.

In one embodiment the user interface script is received as for example a text file. In one embodiment a script is stored in a JSON (Java Script Object Notation) format with references to resources such as images, icons and applications.

Figure 6 shows an example of a user interface object model 600 for a user interface specification in object format and Table 1 provides an example of a script corresponding to the user interface object model 600. The script specifies a log in screen (part of the settings for the user interface object (UI in fig 6)) and a shared widget area (TOOLBAR in fig 6) having two widgets in a status bar. The first widget being a clock (CLOCK in fig 6) and a widget for notifying that new messages have been received (MESSAGE in fig 6). The script further specifies a first universe named"HOME' (HOME in fig 6) and how the universe should be displayed. Note that the script also specifies different names to be displayed for different languages making the script highly versatile when it comes to being used with different languages. In this example three languages are specified, English (en), French (fr) and Swedish (sv). The settings in this example specify how the universe or tab should be displayed both in portrait mode and in landscape mode as well as how it should be displayed when the tab is selected.

The script further specifies a widget area (WIDGETS in fig 6) having two widgets W1 and W2 (W1 and W2 in fig 6). Each widget is specified with settings for how and where it should be displayed.

The script also specifies an icon area (ICONS in fig 6) having four icons A1, A2, A3 and A4 (A1, A2, A3 and A4 in fig 6). In one example the icon area is specified to be the same in both the portrait mode and the landscape mode. In this example it is specified how the icon area is to be displayed depending on the mode. The script also contains settings on how the icons should be displayed.

The script further includes specifications for two other tabs or universes, named "SPORT'and'HEALTH'(referenced SPORT and HEALTH in fig 6). In this example the script has been shortened to not include the actual specifications for these two tabs to save space.

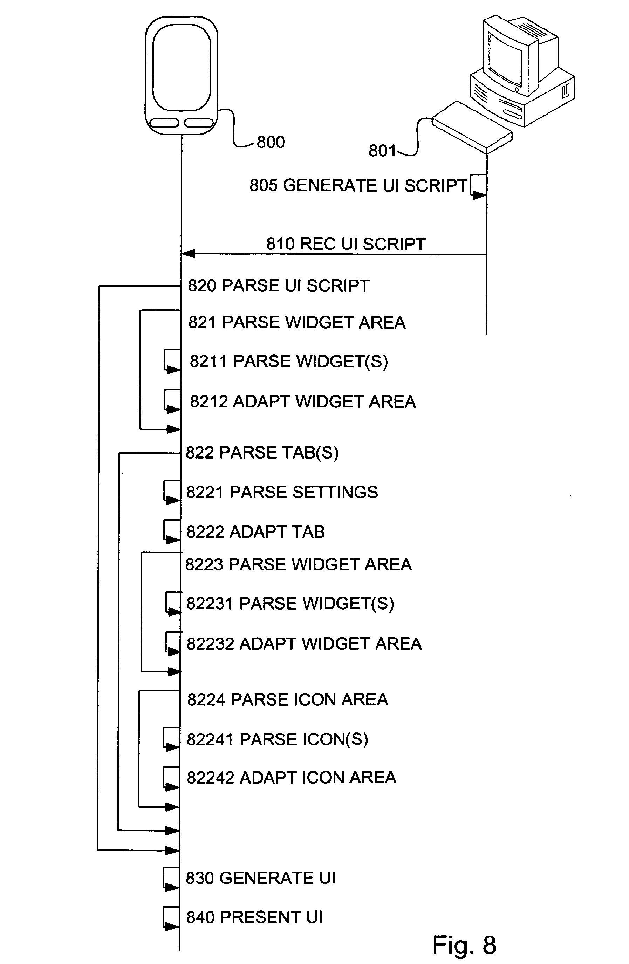

Figure 8 shows a functionality graph for a controller (not shown, but referenced 210 in figure 2) of a mobile communications terminal 800 adapting a user interface according to an embodiment of the teachings herein, resulting in a user interface layout as is disclosed in figures 7A-C which show each a view of how the resulting user interface is displayed on a display 720 of a mobile communications terminal 700. Figure 7A shows a view of the resulting user interface being rendered in portrait mode. Figure 7B shows a view of the resulting user interface being rendered in landscape mode where the number of columns is 2 (as in the example script of table 1). Figure 7C shows a view of the resulting user interface being rendered in landscape mode where the icon area is specified to show a linear representation of the icons.

A user interface script is generated 805, possibly in a remote (operator) terminal 801. As has been disclosed in the above, the script may be generated through graphical tools or by design specifications that are fed into the remote terminal 801. The controller 210 receives the user interface script 810 which the controller 210 parses 820. The parsing is effected through the use of a grammar. The grammar may be specified in a semantic notation such as Extended Bachus Naur Form (EBNF). An example of such a grammar is shown in table 2.

As the controller 210 parses the script table 1 the controller 210 generates an object tree, as is shown in figure 6, which the controller traverses wherein the first object is the main object for the user interface which is parsed to retrieve the general settings for the user interface. It should be noted that in one embodiment a script is analyzed by first parsing it and generating an object tree that is later traversed. To keep the description herein concise and easy to overview the description will describe the parsing and traversing as being one and the same action, but, as would be apparent to skilled person, the actions can be performed in the order of first parsing and later traversing.

Secondly a shared widget area object is parsed 821. The widget area is parsed to retrieve settings for the widget area and also to parse for which widgets that are to be displayed as part of the widget area. In the example of figure 6 the widget area references a toolbar area that has two widgets, one for a clock (CLOCK) and one for showing if incoming messages exist (MESSAGE), which are parsed 8211. The controller 210 adapts 8212 the resulting user interface accordingly. The resulting toolbar is shown in figures 7A-C and is referenced 750. As can be seen the CLOCK widget is represented by a digital clock and the MESSAGE widget is represented by an envelope icon symbolizing that messages have been received.

The controller 210 proceeds with parsing 822 a first tab or universe object (referenced HOME in figure 6 and Universe1 in table 1). The TAB:HOME object of figure 6 is parsed to retrieve settings 8221 for the tab such as background color, which icon to represent the tab etc. The controller 210 then adapts the tab area 8222 accordingly. A widget area (WIDGETS) specific to the tab HOME is then parsed 8223. Two widgets W1 and W2 are parsed 82231 and the widget area (WIDGETS) is adapted 82232 according to the settings retrieved through the parsing of the widget area. The resulting widget area is shown in figures 7A-C and the widgets are referenced W1 and W2. The dashed lines indicating the widgets W1 and W2 in figures 7A-C indicate that a widget need not be displayed with any clear demarcations.

The controller 210 continues parsing and parses 8224 an icon area (ICONS) for retrieving settings for the icon area such as the layout of the icons. The icons can be shown in a grid layout with a specified number of columns (as in the example user interface script of table 1) or in a linear list (number of columns =1). The controller 210 further parses the ICONS object for an related icons 82241. In this example four icon objects A1, A2, A3 and A4 are parsed. The controller adapts 82242 the icon area accordingly. The icon area of the resulting user interface as rendered is shown in figure 7A in portrait mode and in Landscape mode in figures 7B and 7C. In figure 7B the number of columns is 2 and all four icons are shown in a grid view. The size of the icons has been adapted to fit the display. In figure 7C a view is shown of a UI in landscape mode where the icon layout has been defined to be in a list (1 column). This can be specified in a script as:

```
 "landscape":{
        "layout":"List",
 }
```

In the example of figure 7C the icons A1, A2 and A3 are displayed in a list of icons. The icons have the same size as in figure 7A and all four icons do not fit on the display 720. The controller 210 is configured to adapt the icon area accordingly by providing a scrollbar 760.

The example script of table 1 further comprises specifications for two more tabs or universes referenced SPORT and HEALTH in figure 6 and Universe2 and Universe3, respectively, in the example script. These are also parsed by repeating the parsing referenced 822 to 822232 in figure 8.

As the user interface script has been parsed (and traversed the resulting object tree) the controller 210 proceeds with generating a resulting user interface 830 and thereafter presents 840 the resulting user interface by rendering it on the display 720 of the mobile communications terminal 700, 800. As can be seen from figures 7A-C the resulting user interface has one selected tab 740 referenced HOME and two tabs that are not, selected referenced SPORT 745a and HEALTH 745b. A toolbar 750 is displayed showing representations of the widgets CLOCK and MESSAGE in the form of a digital clock and an icon indicating received messages. In the tab area two tab-specific widgets W1 and W2 are displayed along with four icons A1, A2, A3 and A4 (in figure 7C only three icons are shown). In figure 7A the icons are shown in a grid and the icons have one size. In figure 7B (landscape mode) the icons are shown in a smaller size to allow for all four icons to be shown simultaneously. In one example the script can specify that the icons should have the same size in both landscape mode and portrait mode, and if there are too many icons to be displayed simultaneously the controller 210 adapts the user interface to also include a scrollbar 760 as in figure 7C.

In the example of figure 8 the controller 210 of the mobile communications terminal 800 is configured to parse the script. This allows for a straightforward parsing and adaptation as the mobile communications terminal 800 carries information on its own user interface components, such as display size and/or resolution, as well as other capabilities that are affected by the user interface. One example of such capabilities is the presence of a camera. Should the user interface script specify a camera application and the mobile communications terminal 800 does not have camera capabilities, the controller 210 will adapt the user interface by not including the camera application.

In one embodiment the mobile communications terminal 800 is configured to receive an already adapted user interface. In this embodiment a remote terminal 801 is configured to parse and adapt the specified user interface. This allows for easier updates of semantic changes, such as changes to the grammar. However, this requires that the remote terminal 801 carries updated information on the mobile communications terminals' 800 capabilities and user interface components.

In one embodiment the controller 210 is configured to determine that a capability that is specified in the user interface script does not exist in the mobile communications terminal and in response thereto adapt the mobile communications terminal by fetching or downloading the required capability. In one example the capability is an application.

By designing a semantic grammar that does not require specific sizes and positions to be given and by enabling easy generation of a script from such a grammar the teachings herein provide a manner of adapting a generalized user interface to many different mobile communications terminals, taking their individual physical characteristics and capabilities into account. This provides for a simple manner of a centralized generation of new user interface styles for a wide range of terminals without having to know details of each terminal model and without exhaustive testing of the resulting user interfaces. It further provides for a simple manner for customizing a user interface to a particular user's needs and desires without the user having to know or take into account specific details on the mobile communications terminal's physical characteristics and/or user interface components.

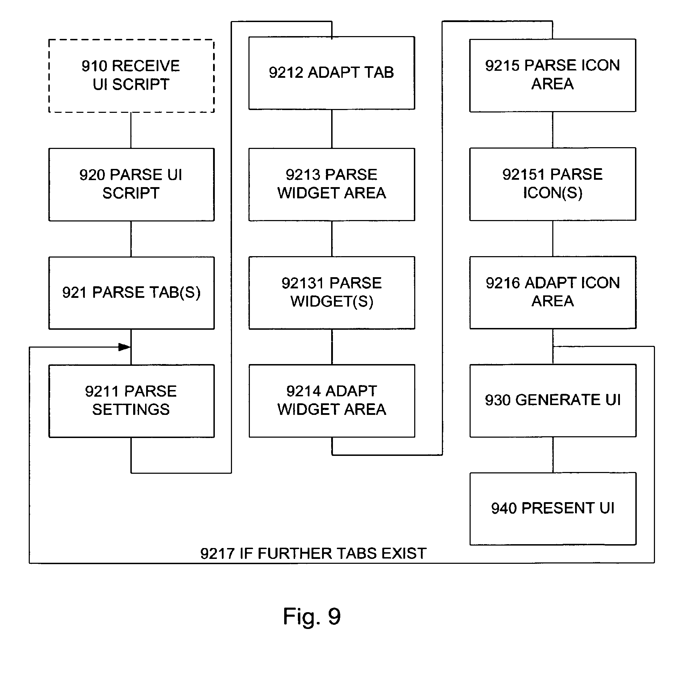

Figure 9 shows a flowchart of a general method according to herein. A device, such as a mobile communications terminal or a remote terminal, receives a user interface script 910. In figure 9 this is indicated to be optional by being drawn with dashed lines. This is to indicate that the following parsing (and traversing) can be performed either locally in a mobile communications terminal or remotely in a remote terminal. The user interface script is parsed 920 to retrieve settings and other data on a user interface to be installed in a mobile communications terminal. The parsing includes parsing at least one tab or universe 921 by parsing to retrieve settings 9211 for the tab and to adapt 9212 the tab accordingly. The script is also parsed for settings for a widget area 9213 which includes parsing for zero or more widgets 92131 and adapting the widget area accordingly 9214. The script is furthermore parsed for settings for an icon area 9215 which includes parsing for zero or more icons 92151 and adapting the icon area accordingly 9216. As has been noted in the above, an icon may represent an application, a function, a link or address or another resource.

It is determined whether the user interface script includes additional tabs 9217 and if so these tabs are also parsed. As the parsing is finished a resulting user interface is generated 930 and adapted according to the mobile communications terminal's user interface components and capabilities, and presented 940.

It should be noted that the order of the flowchart shown in figure 9 is solely given for exemplary purposes. Some or many of the steps may be performed in a different order and also may be repeated for other objects not described in this example. For example, the method may comprise parsing for both tab specific widgets and for shared widgets (as in the examples of figures 6, 7A-C and 8). The adaptation of the various objects may also be performed after the parsing of the settings for the object (as in figure 9) or after the whole object has been parsed or alternatively after all objects have been parsed.

Figure 10 shows an example embodiment of a mobile communications terminal 1000 and a resulting user interface 1010 being rendered in portrait mode where the icon area is specified to show a linear representation of the icons A1-A4. The mobile communications terminal 1000 comprises 5 keys 1030a-e that are arranged under a display 1020. The display 1020 is a touch display in this example embodiment. In one embodiment the mobile communications terminal 100 also comprises a full ITU-T keypad or a QWERTY keypad (not shown). The ITU-T keypad or a QWERTY keypad may be arranged on a second housing part that is slideably or foldably connected to the housing of the mobile communications terminal 1000. The user interface 1010 is displayed on the display 1020. The user interface 1010 comprises a status bar area 1050. The user interface 1010 also comprise a widget area where two widgets W1 and W2 are displayed, one being a calendar function W1 and one being a weather application W2.

The user interface 1010 also comprises an icon area where four icons A1-A4 are displayed. As is indicated by the scrollbar 1060 and the arrow 1065 further icons are available through a scrolling action. The scrolling action may be effectuated through the touch display 1020 (through the scrollbar 1060, the arrow key 1065 or a general touch display scrolling action) or through activation of a scroll key 1030d. The three topmost icons A1-A3 represent a functionality of the mobile communications terminal 100, whereas the bottom icon A4 is associated with retrieving and displaying further icons being associated with applications that, in this example, have been grouped in a group named"TOOLS". This allows for a simple user interface that is easy to overview, but still offers advanced functionality to a user through the multitude of retrievable applications. An icon A1-A4 can be selected through the touch display 1020 or through a scrolling action followed by a selection action activated through the OK-key 1030a.

In one embodiment the manner of accessing and scrolling through the icons A1-A4 can be set in the user interface script.

The mobile communications terminal further comprises a back key 1030b for traversing backwards in a menu or icon hierarchy, a menu key 1030c for displaying menu options or general (application-specific) options, and a home key 1030e for returning to the top level of the universe.

In one embodiment the user interface script for the user interface 1010 can be configured to specify which functions and/or options that should be displayed for an application or user interface level when the menu key 1030c is activated.

The use of icons that are associated with the action of retrieving and displaying further icons allow for creating a hierarchical level system in the universe or tab.

When the user interface 1010 only has one universe such icons become especially useful for providing a useful number of applications while maintaining a user interface that is simple and easy to overview.

The detailed description above has been focused on the display characteristics of resolution and size. Other user interface characteristics that a user interface can be adapted for are: the presence of a touch screen in which case the icons will be adapted to be activated through a series of scrolling or focusing commands given through a navigation key, such as scroll keys, and a selection command given through for example an accept key; whether the screen is a color screen or not, in which case all specified colors are transformed into a grayscale version. For simple black and white screens having no grey scale all colors can be replaced by black for borders and text and the background being white (or no color) and images may be replaced with a descriptive text or a modified version of the image (wherein only outline and main characteristics of the image are shown); and if the mobile communications terminal has text-to-speech capabilities in which case each object can be associated with a function to read out the name of the object as the object is focused.

The invention has mainly been described above with reference to a few embodiments. However, as is readily appreciated by a person skilled in the art, other embodiments than the ones disclosed above are equally possible within the scope of the invention, as defined by the appended patent claims.

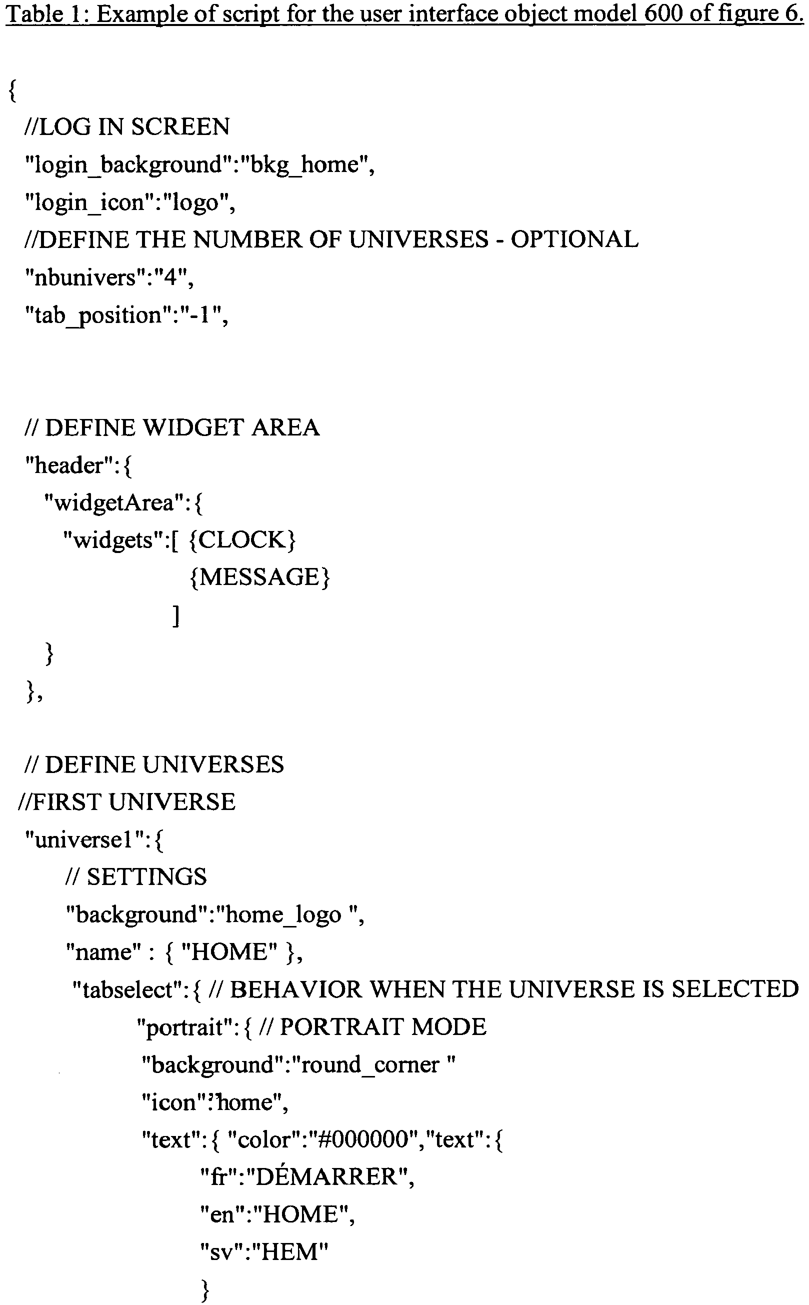

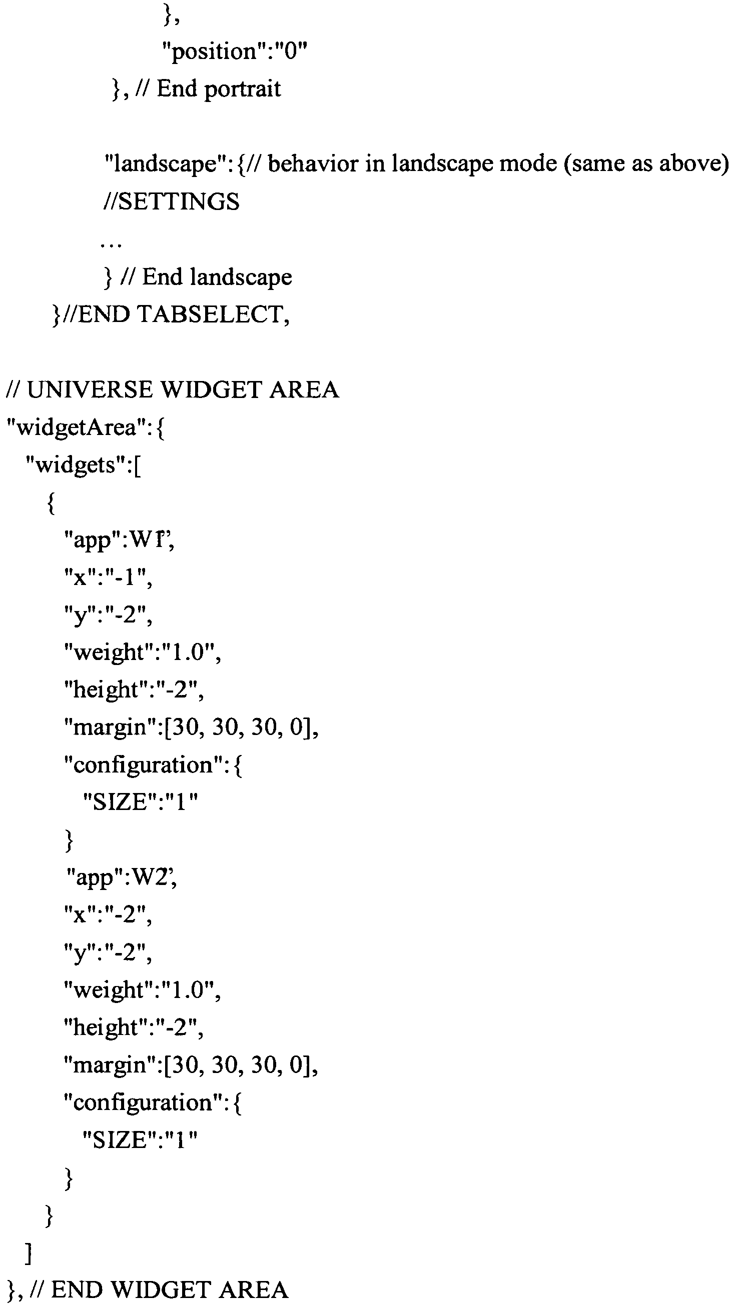

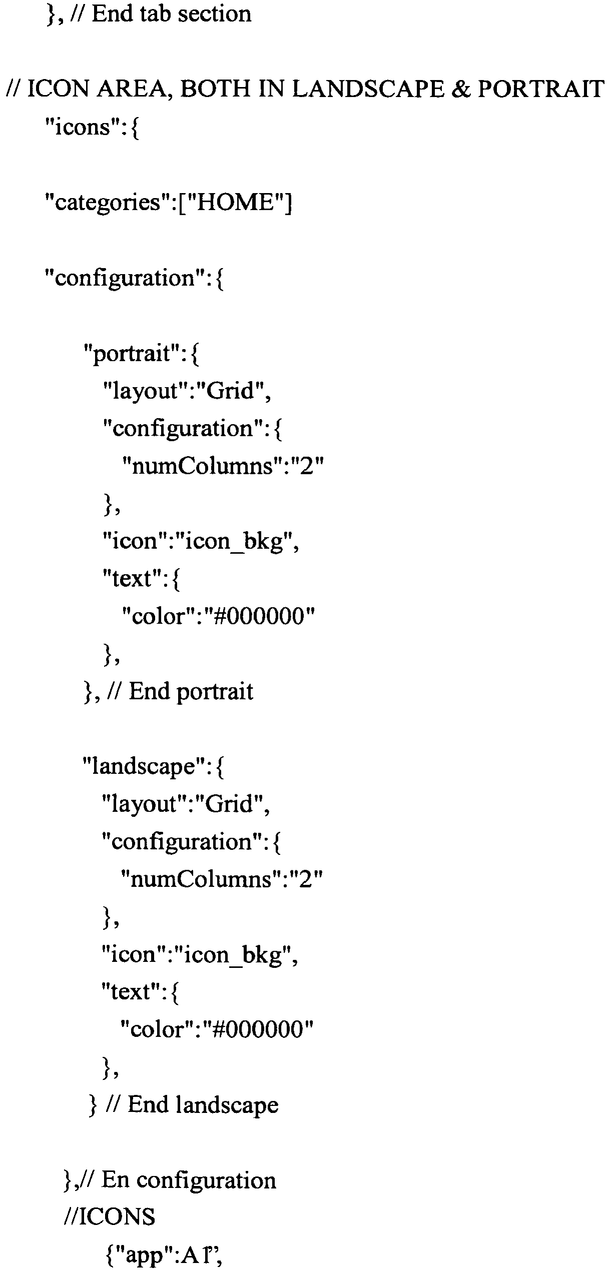

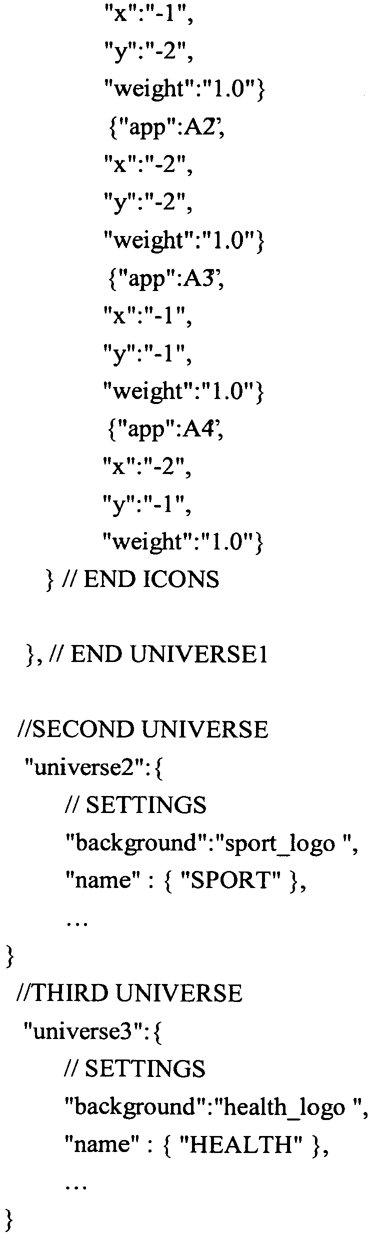

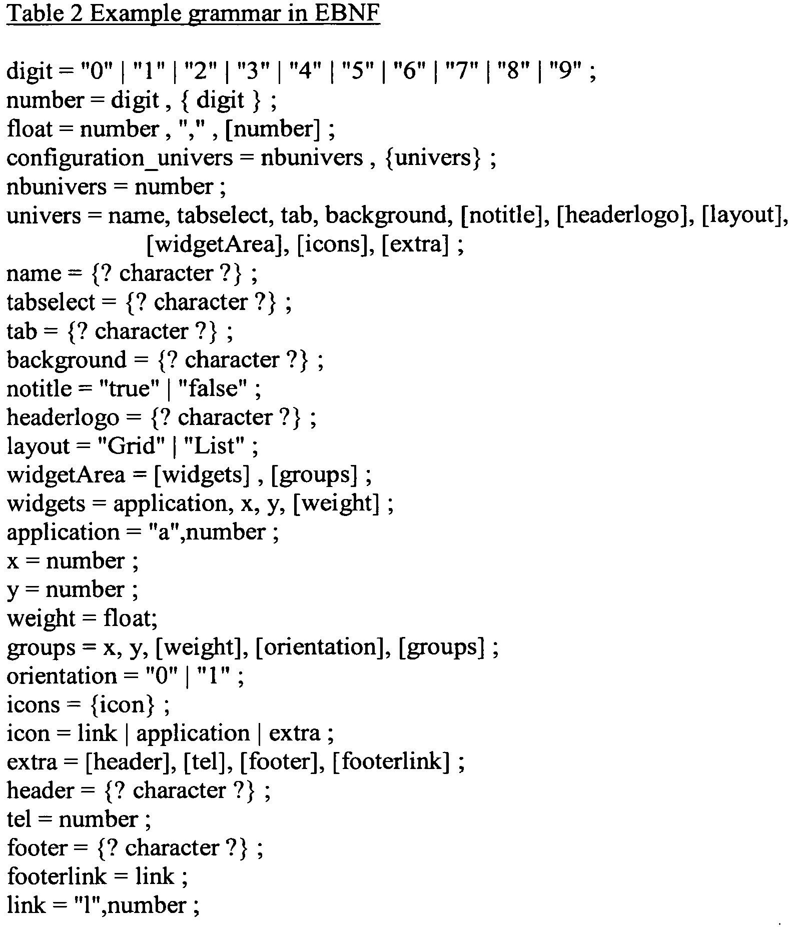

## Claims

1. A mobile communications terminal (200) comprising a memory (240), a user interface component (120, 220) and a controller (210), wherein said controller (210) is configured to:
receive a user interface script, said user interface script defining a user interface comprising at least one tab object (540);
parse said user interface script, by parsing said at least one tab, said tab comprising settings and at least one icon being associated with an action, wherein the settings are in a form that indicates an internal relationship and is independent of the user interface component (120, 220);
generate a resulting user interface by adapting said at least one tab according to characteristics of the user interface component (120, 220) based on the settings; and
present said resulting user interface to provide a simplified control interface for said mobile communications terminal (200).

2. The mobile communications terminal (200) according to claim 1, wherein the controller (210) is further configured to parse the user interface script by parsing a widget area, said widget area being related to zero or more widgets

3. The mobile communications terminal (200) according to claim 1 or 2, wherein said widget area is related to and specific to a tab or shared by all tabs.

4. The mobile communications terminal (200) according to any of claims 1 to 3, wherein the controller (210) is further configured to parse the user interface script by parsing the tab by:
parsing for settings;
parsing an icon area, said icon area being related to said at least one icon;
adapting said icon area to characteristics of the user interface component (120, 220) based on the settings; and
adapting said tab according to characteristics of the user interface component (120, 220) based on the settings.

5. The mobile communications terminal (200) according to any of claims 1 to 4, wherein said adaptation of said tab comprises to:
determine a position for a graphical representation of an object based on the characteristics of the user interface component;
determine a size of a graphical representation of said object based on the characteristics of the user interface component; and
determine an association of a rendering of said object to a functionality of said mobile communications terminal; and wherein
said object is related to a widget, a tab or an icon.

6. The mobile communications terminal (200) according to any of claims 1 to 5, wherein said icon comprises a graphical representation and represents an action to launch or activate one of an application, a link/shortcut, a remote application or a function of the mobile communications terminal (200).

7. The mobile communications terminal (200) according to claim 6, wherein said icon represents an address and said associated action being initiating a communication session based on the address.

8. The mobile communications terminal (200) according to any of claims 1 to 7, wherein said object has a graphical representation icon having a position and wherein the controller is configured to determine the position based on a size of a display (120) being part of the user interface component (220) and/or a display area and the number of graphical representations that are to be displayed.

9. The mobile communications terminal (200) according to any of claims 1 to 8, wherein said object has a graphical representation icon having a size and wherein the controller is configured to determine the size based on a size of a display (120) being part of the user interface component (220) and/or a display area and the number of graphical representations that are to be displayed.

10. The mobile communications terminal (200) according to any of claims 1 to 9, wherein said user interface script defining a user interface comprising one tab object (540).

11. The mobile communications terminal (200) according to any of claims 1 to 10, wherein said at least one of said at least one icon (1070) is associated with an action of retrieving and displaying further icons.

12. A method for use in a mobile communications terminal (200) comprising a memory (240), a user interface component (120, 220) and a controller (210), said method comprising:
receiving a user interface script, said user interface script defining a user interface comprising at least one tab object;
parsing said user interface script, by parsing said at least one tab, said tab comprising settings and at least one icon being associated with an action, wherein the settings are in a form that indicates an internal relationship and is independent of the user interface component (120, 220);
generating a resulting user interface by adapting said at least one tab according to characteristics of the user interface component (120, 220) based on the settings; and
presenting said resulting user interface to provide a simplified control interface for said mobile communications terminal (200).

13. A computer readable storage medium (40) encoded with instructions (41) that, when loaded and executed on a processor, causes the method according to claim 12 to be performed.
